# EUROPÄISCHE PATENTSCHRIFT

(11) **EP 0 807 458 B1**
(45) Veröffentlichungstag und Bekanntmachung des Hinweises auf die Patenterteilung: **12.12.2001**
(21) Anmeldenummer: 97104767.5
(22) Anmeldetag: 20.03.1997
(51) Int. Cl.: B01D 53/72, B01J 10/00, B01J 19/00, C02F 1/72

(54) **Verfahren zum Verbrennen von Schadstoffen in überkritischem Kohlendioxid**
Method of burning of pollutants in supercritical carbon dioxide
Méthode d'incinération de polluants dans du dioxyde de carbone supercritique

(30) Priorität: 14.05.1996 DE 19619559
(43) Veröffentlichungstag der Anmeldung: 19.11.1997
(73) Patentinhaber: Forschungszentrum Karlsruhe GmbH, 76133 Karlsruhe (DE)
(72) Erfinder: Bleyl, Hans-Jürgen, Dr., 76344 Eggenstein-Leopoldshafen (DE); Kruse, Andrea, Dr., 76689 Karlsdorf (DE); Schmieder, Helmut, Dr., 76149 Karlsruhe (DE)
(74) Vertreter: Rückert, Friedrich, Dr.

(56) Entgegenhaltungen:
- EP-A- 0 506 069
- EP-A- 0 673 688
- WO-A-93/02969

## Beschreibung

Die Erfindung betrifft ein Verfahren zum Verbrennen von organischen Schadstoffen in überkritischem Kohlendioxid gemäß dem ersten Patentanspruch.

In der Veröffentlichung "OXIDATION OF CUMENE IN SUPERCRITICAL REACTION MEDIA" von G. J. Suppes, R. N. Occhiogrosso und M. A. McHugh in Ind. Eng. Chem. Res. **1989**,28, 1152-1156 ist ein Verfahren beschrieben, bei dem Isopropylbenzol (Cumol) in überkritischem Kohlendioxid mit einer überstöchiometrischen Menge Sauerstoff oder Luft zu 2-Phenyl-2-Hydroperoxyl-Propan oxidiert wird. Die Oxidation wird bei ca. 110° C in einer Vorrichtung durchgeführt, bei der die Reaktanden mit einer Oberfläche aus Edelstahl oder Gold in Kontakt stehen. Diese Oberflächen bewirken eine katalytische Beschleunigung der Oxidation. Zusätzlich wird 2-Phenyl-2-Hydroperoxyl-Propan als Initiator beigemischt. Bei diesem Verfahren findet keine vollständige Oxidation der organischen Verbindung statt; sie ist auch nicht beabsichtigt.

Über eine Oxidation in überkritischem Kohlendioxid wird auch in der Veröffentlichung "Oxidation Catalysis in a Supercritical Fluid Medium" von Kerry M. Dooley und F. Carl Knopf in Ind. Eng. Chem. Res. 1987, 26, 1910-1916 berichtet. Toluol wird in Gegenwart von Redox- oder Säurekatalysatoren mit Luft in Kontakt gebracht und hauptsächlich zu Benzaldehyd oxidiert. Die Temperatur während der Oxidation wurde im Bereich zwischen 400 und 500 K (127° C bis 227° C) gehalten; der Reaktionsdruck beträgt 80 atm. Auch mit diesem Verfahren wird keine vollständige Oxidation der organischen Verbindungen erzielt.

Aus der Veröffentlichung "CATALYTIC OXIDATION OF MODEL WASTE AROMATIC HYDROCARBONS IN A DENSE FLUID" von Tien-Hai Pang, Minghua Ye, F. Carl Knopf und Kerry M. Dooley in Chem. Eng. Comm. 1991, Vol. 110, pp. 85-97 ist ein weiteres Verfahren zur Oxidation von organischen Stoffen in überkritischem Kohlendioxid bekannt. Bei diesem Verfahren werden aromatische Verbindungen mit einer stöchiometrischen Menge Luft in Kontakt mit einem Katalysator vollständig oxidiert. Die Autoren geben an (Seite 89/90), daß in Abwesenheit eines Katalysators bei Einspeisetemperaturen von weniger als 573 K (300° C) keine Reaktionen beobachtet wurden. Ein Katalysator ist daher nach Ansicht der Autoren zur vollständigen Oxidation aromatischer Verbindungen in überkritischem Kohlendioxid notwendig.

In der Veröffentlichung "Catalytic Oxidation of Toluene and Tetralin in Supercritical Carbon Dioxide" von Lubo Zhou, Can Erkey und Aydin Akgerman, AIChE-Journal Vol. 41, No. 9 (September 1995) 2122-2130 wird die vollständige Oxidation von Toluol und Tetrahydronaphtalin (Tetralin) mit Sauerstoff in überkritischem Kohlendioxid beschrieben. Die Oxidation wird bei Temperaturen von 573 K (300°C) bis 663 K (390° C) in einem Festbettreaktor durchgeführt; sie wird durch einen Platin-Katalysator (0,5 % Platin auf Gamma-Aluminiumoxid), der einem Vorbehandlungsprozeß unterzogen worden war, katalysiert.

Die Autoren geben an, daß der Katalysator wahrscheinlich infolge von Wasser, das mit Platin reagiert, bei Temperaturen zwischen 150° C und 250° C (423-523 K) unwirksam wird. Die Messung der Katalysator-Wirksamkeit wurde vor den kinetischen Experimenten bei der niedrigsten Verfahrenstemperatur für jede Reaktion durchgeführt. Oberhalb der angegebenen Temperaturen wird keine Deaktivierung des Katalysators beobachtet.

Die EP-A-0 506 069 offenbart ein Verfahren, bei dem ein organischer Brennstoff in überkritischem Kohlendioxid gelöst und anschließend mit Hilfe eines Oxidationsmittels verbrannt wird. Die Verbrennung findet in einer Brennkammer im wesentlichen bei Atmosphärendruck statt. Wird die Lösung des Brennstoffs in überkritischem Kohlenstoff in die Brennkammer gesprüht, die auf Atmosphärendruck gehalten wird, verdampft das Kohlendioxid nahezu augenblicklich und der Brennstoff bildet fein verteilte Tröpfchen, die leicht brennbar sind. Die Verbrennung kann mit einem Zusatzbrenner in der Brennkammer aufrechterhalten werden.

Die WO 93 02969 A beschreibt ein Verfahren zur Oxidation von organischen Stoffen in überkritischem Wasser als Lösungsmittel. Bei dieser Oxidation entsteht Wasser und Kohlendioxid. Das Kohlendioxid wird entfernt, damit das überkritische Wasser wieder rezyklierbar ist. Es wird davon ausgegangen, daß die Oxidation der organischen Stoffe behindert wird, wenn das Lösungsmittel das Oxidationsprodukt Kohlendioxid enthält.

Aufgabe der Erfindung ist es, ein Verfahren anzugeben, mit dessen Hilfe organische Schadstoffe, insbesondere aromatische Verbindungen, in überkritischem Kohlendioxid vollständig oxidiert werden können, ohne daß ein Katalysator erforderlich ist.

Die Aufgabe wird durch das im ersten Patentanspruch beschriebene Verfahren gelöst. In den weiteren Patentansprüchen sind bevorzugte Ausgestaltungen des Verfahrens angegeben.

Die Erfindung beruht auf der Beobachtung, daß zur vollständigen Oxidation organischer Schadstoffe kein Katalysator erforderlich ist, wenn die Komponenten Schadstoff, Sauerstoff und überkritisches Kohlendioxid mit einem heißen Körper in Kontakt gebracht werden. Der heiße Körper wird vorzugsweise auf einer Temperatur von 200° C oder mehr gehalten. Die Temperatur des heißen Körpers wird entsprechend der Oxidationsbeständigkeit des Schadstoffs gewählt. Während einige aliphatische Verbindungen bereits bei Temperaturen ab 200° C, etwa bei 250° C vollständig oxidiert werden können, ist es zweckmäßig, für schwer oxidierbare aromatische Verbindungen, z. B. Benzol, eine Temperatur von 300° C oder mehr zu wählen. Temperaturen über 500° C sind jedoch in der Regel nicht notwendig.

Als heißer Körper kommt ein beliebiger Körper in Betracht. Beispielsweise kann als heißer Körper ein elektrisch heiz- und regelbarer Heizstab aus einem unter den Reaktionsbedingungen nicht oxidierbaren Material eingesetzt werden. Alternativ kann die Behälterwand des Reaktors, in dem die Oxidation durchgeführt wird, von außen ganz oder teilweise beheizt werden.

Beim erfindungsgemäßen Verfahren wird der Kohlenstoffanteil des Schadstoffs weitgehend oder vollständig zu Kohlendioxid oxidiert. Mit dem durch die Oxidation entstehenden zusätzlichen Kohlendioxid können Verluste an überkritischem Kohlendioxid, die bei einem Kreislaufbetrieb auftreten können, kompensiert werden.

Die Oxidation der Schadstoffe erfolgt gleichmäßiger, insbesondere ohne ausgeprägte Temperatur- und Druckspitzen, wenn der überkritischen Lösung des Schadstoffs 1 bis 10 Vol.-% Wasser oder Wasserstoffperoxid zugemischt werden. Wird das überkritische Kohlendioxid im Kreislauf gefahren, ist es daher nicht notwendig, das sich aus der Oxidation des Wasserstoffanteils organischer Schadstoffe bildende Wasser vollständig zu entfernen.

Der Druck des überkritischen Lösungsmittels Kohlendioxid braucht während der Oxidation an dem heißen Körper nur knapp über dem kritischen Druck zu liegen. Zweckmäßig sind daher Drücke zwischen 70 und 300 bar. Höhere Drücke werden aus Kostengründen vermieden.

Ein wichtiges Einsatzgebiet des erfindungsgemäßen Verfahrens ist die Oxidation von organischen Schadstoffen, die bei der Regenerierung von Filtern anfallen. Besondere Vorteile ergeben sich, wenn Filter, die zur Reinigung von kontaminiertem Erdboden eingesetzt wurden, mit überkritischem Kohlendioxid regeneriert werden, woauf das nunmehr mit den ausgefilterten Schadstoffen beladene Kohlendioxid nach dem erfindungsgemäßen Verfahren behandelt wird. Nach der Oxidation können Teile des gebildeten Wassers und gegebenenfalls die Oxidationsprodukte von Hetero-Atomen des Schadstoffs abgetrennt werden, wonach das überkritische Kohlendioxid wieder zur Filterregeneration eingesetzt wird.

Die Erfindung wird im folgenden anhand von Ausführungsbeispielen und Figuren näher erläutert.

Es zeigen:
Fig. 1 ein Schema der für die Versuche verwendeten Anlage;
Fig. 2 das Temperaturprofil der Oxidation von Ethanol entlang des Reaktors;
Fig. 3 den Sauerstoffgehalt im Ausfluß des Reaktors bei der Oxidation von Ethanol im Ausfluß bei wechselnden Temperaturen;
Fig. 4 das Temperaturprofilbei der Oxidation von Toluol;
Fig. 5 den Sauerstoffgehalt im Ausfluß des Reaktors bei der Oxidation von Toluol.

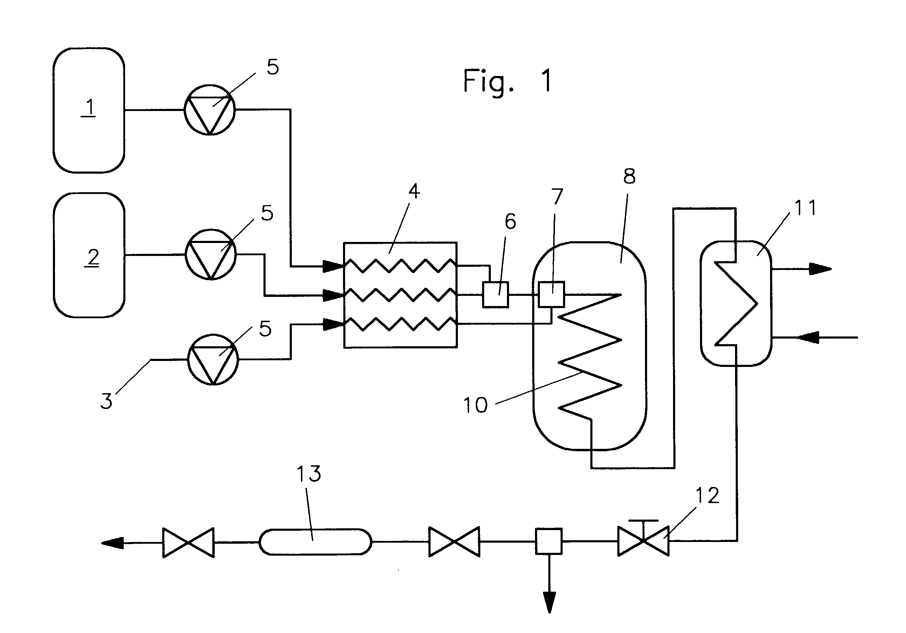

In Fig. 1 ist die Versuchsanlage schematisch dargestellt. Aus einem Behälter 1 wird eine organische Verbindung und/oder der Schadstoff über eine Membranpumpe 5 in einen Vorwärmer 4 eingeleitet. Dem Vorwärmer 4 werden außerdem über eine weitere Membranpumpe 5 aus einem Behälter 2 überkritisches Kohlendioxid und über einen Kompressor 9 Luft 3 zugeführt. Das Kohlendioxid wird vor der Kompression gekühlt, damit es pumpfähig wird. Die organische Verbindung und/oder der Schadstoff werden in einem Mischkopf 6 in dem überkritischen Kohlendioxid gelöst, der dem Vorwärmer 4 nachgeschaltet ist. Die Lösung der organischen Verbindung und/oder des Schadstoffs in überkritischem Kohlendioxid wird in einem weiteren Mischkopf 7 mit der Luft versetzt. Der weitere Mischkopf 7 befindet sich in einem Wirbelschicht-Sandbad 8, das einen Reaktor 10 umgibt. Mit dem Wirbelschicht-Sandbad 8 wird der Reaktor 10 aufgeheizt und seine Oberflächentemperatur konstant gehalten. Die Versuchstemperatur läßt sich im Bereich zwischen 250° C und 450° C einstellen.

Der Reaktor 10 besteht aus einem Hochdruckrohr aus Inconel mit einem Innendurchmesser von 2 mm; er ist 6 m lang. Nach der Oxidation der organischen Verbindung und/oder des Schadstoffs wird das Reaktionsgemisch in einem Kühler auf zunächst 17° C abgekühlt und dann über ein Ventil 12 auf Normaldruck expandiert. Nach der Auftrennung in flüssige und Gasphase wird der CO-, CO₂- und O₂-Gehalt der Gasphase on-line gemessen. Außerdem werden in einer Probenahmestrecke 13 Gas- und Flüssigkeitsproben genommen und einer Analyse unterzogen.

Die Vorrichtung wird vor der Durchführung der Versuche mit Luft gespült; danach wird der Reaktor in das heiße Wirbelschicht-Sandbad 8 getaucht und auf den Betriebsdruck gebracht. Danach wird das Kohlendioxid und schließlich die organische Verbindung und/oder der Schadstoff zugeführt.

### Beispiel 1

### Oxidation von Ethanol

Die organische Verbindung Ethanol wird häufig bei Extraktionen mit Kohlendioxid zugesetzt, um die Extrahierbarkeit bestimmter Schadstoffe zu verbessern. Wird im Anschluß an die Extraktion des Schadstoffs die Oxidation durchgeführt, müssen unter Umständen größere Mengen Ethanol neben kleineren Mengen Schadstoff verbrannt werden. Aus diesem Grund ist Ethanol eine geeignete Modellsubstanz für die Oxidation organischer Verbindungen, insbesondere von Schadstoffen, in Kohlendioxid.

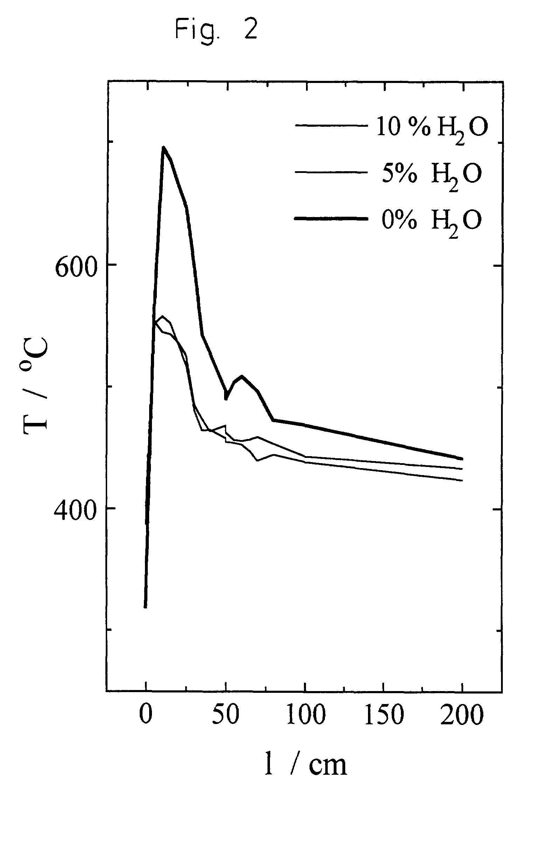

In Fig. 2 ist die Reaktortemperatur gegen die Reaktorlänge für Ethanol mit 10 Vol.-% und 5 Vol.-% Wasser sowie für reines Ethanol aufgetragen. Wie sich aus dem Temperaturanstieg zwischen 0 und 25 cm Reaktorlänge ergibt, verläuft die Oxidation von Ethanol am Anfang des Reaktors. Es zeigte sich, daß ein Zusatz von etwa 5 bis 10 Vol.-% Wasser zum Ethanol die sich durch die Exothermie ausbildende Temperatur absenken und für eine ruhigere, leicht zu kontrollierende Reaktion sorgen. Durch die Wasserzugabe wird die Temperaturspitze am Anfang des Reaktors, die sich mit reinem Ethanol ausbildet, weitgehend vermieden. Anhand des verbleibenden TOC-Gehalts (TOC: Total Organic Carbon) ergibt sich ein Umsatz von > 99,9 %. Die in Fig. 2 dargestellten Ergebnisse wurden mit einer Sandbad-temperatur von 450° C, einem Luftdurchfluß von 450 l/h, einem Kohlendioxid-Fluß von 350 g/h und einem Ethanolfluß von 36 g/h erhalten.

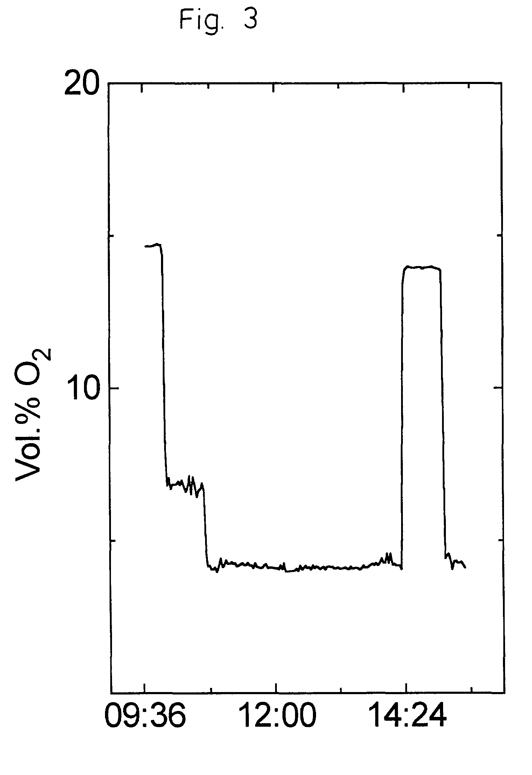

In Fig. 3 ist der Sauerstoff-Gehalt im Reaktor gegen die Zeit aufgetragen, wobei die Sandbad-Temperatur variiert wurde. Wie aus der Abnahme des Sauerstoffgehalts ersichtlich ist, setzt die Oxidation von Ethanol bei einer Sandbad-Temperatur von 330° C ein und bleibt dann auch bei einer Temperaturerniedrigung bis auf 275° C bestehen, wobei in diesem Temperaturbereich eine praktisch vollständige Oxidation zu Kohlendioxid und Wasser erzielt wird. Bei einer Absenkung der Sandbad-Temperatur unter 275° C erlischt die Reaktion, was an dem abrupt ansteigenden Sauerstoffgehalt erkennbar ist. Die Reaktion startet bei 330° C erneut. Der Versuch wurde mit 350 g Kohlendioxid/h, 35 g Ethanol/h und 450 l Luft/h durchgeführt.

### Beispiel 2

### Oxidation von Toluol

Toluol ist schwerer zu oxidieren als Ethanol und ist eine Modellverbindung für aromatische Schadstoffe. Toluol verbrennt mit ähnlich guten Umsätzen wie Ethanol, neigt aber bei höheren Reaktortemperaturen stärker zur Rußbildung. Toluol verbrennt ebenfalls unter starker Wärmeentwicklung, was zu einer lokalen Temperaturerhöhung in der Reaktionszone führt.

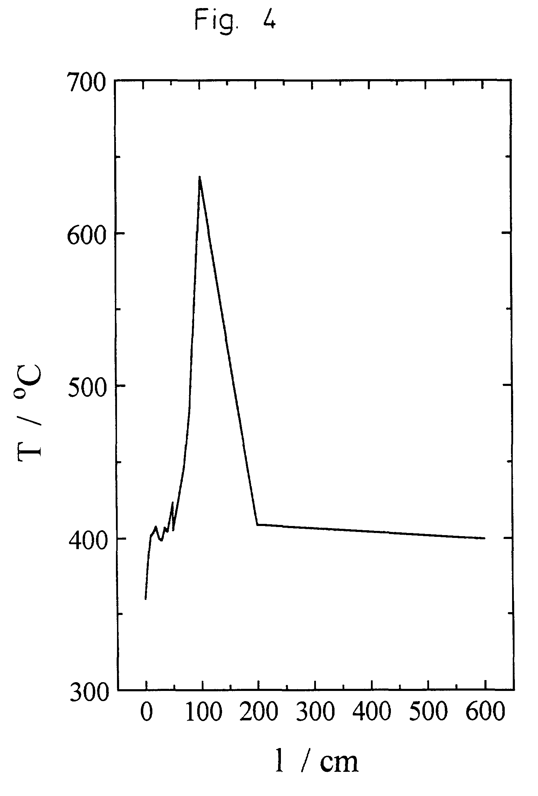

Fig. 4 zeigt ein Beispiel für die Wärmeentwicklung. Die Reaktortemperatur ist gegen die Reaktorlänge aufgetragen. Die höchste Temperatur stellt sich im Bereich zwischen 0 und 200 cm ein. Die Sandbad-Temperatur betrug 400° C, der Luftdurchfluß 720 l/h, der Fluß des Kohlendioxids 500 g/h und der Toluol-Fluß 35 g/h.

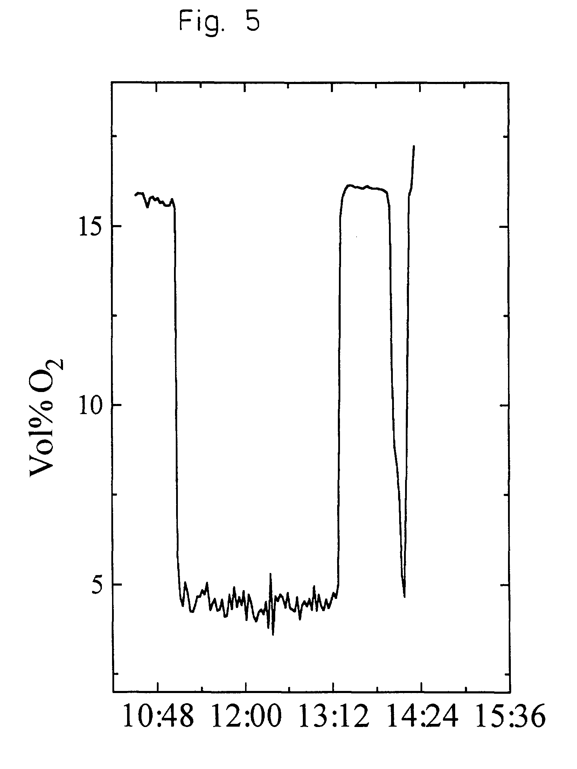

In Fig. 5 ist der Sauerstoff-Gehalt im Reaktor bei wechselnden Sandbad-Temperaturen gegen die Zeit aufgetragen. Wie der abrupt sinkende Sauerstoff-Gehalt im Reaktor zeigt, zündet die Oxidation ab einer Sandbad-Temperatur von 370° C. Die Oxidation erlischt, wenn die Sandbad-Temperatur unter 308° C abgesenkt wird. Dabei steigt der Sauerstoff-Gehalt im Reaktor wieder an. Ebenso wie bei den Versuchen mit Ethanol war die Oxidation des Toluols entweder vollständig oder fand nicht statt.

### Beispiel 3

### Oxidation von Ethanol/Toluol-Mischungen

Untersucht wurden Mischungen, die entweder aus 30 Vol.-% oder 30 Vol.-% Toluol bestanden. Das Zündverhalten und das sich ausbildende Temperaturprofil war dem reinen Ethanol sehr ähnlich. Auch hier war der Umsatz praktisch vollständig. Die Mischungen zeigten je nach Toluol-Gehalt eine erhöhte Neigung zur Rußbildung bei höheren Sandbad-Temperaturen, die aber bei weitem nicht so ausgeprägt war wie bei reinem Toluol.

## Patentansprüche

1. Verfahren zum Verbrennen von organischen Schadstoffen in überkritischem Kohlendioxid, bei dem man
a) ohne einen Katalysator einzusetzen
b) eine Lösung der Schadstoffe in überkritischem Kohlendioxid herstellt,
c) in der im überkritischen Zustand vorliegenden Lösung eine zur vollständigen Oxidation der Schadstoffe ausreichende Menge an Sauerstoff löst,
d) die Lösung mit einem heißen Körper in Kontakt bringt, der eine solche Temperatur aufweist, daß der Kohlenstoffanteil der Schadstoffe durch den Sauerstoff zu Kohlendioxid oxidiert wird.

2. Verfahren nach Anspruch 1, bei dem in der im überkritischen Zustand vorliegenden Lösung zusätzlich Wasser oder Wasserstoffperoxid gelöst wird.

3. Verfahren nach Anspruch 1, bei dem der heiße Körper eine Temperatur von mindestens 200° C aufweist.

4. Verfahren nach Anspruch 1, 2 oder 3, bei dem der Druck während der Oxidationsreaktion im Bereich zwischen 70 bar und 300 bar gehalten wird.

5. Verfahren nach Anspruch 1 mit Benzol oder Benzolderivaten als Schadstoff.

6. Verfahren nach Anspruch 1, bei dem die Lösung der Schadstoffe hergestellt wird, indem ein Filter, das zur Reinigung von mit dem Schadstoff verunreinigtem Erdboden eingesetzt worden war, mit überkritischem Kohlendioxid regeneriert wird.

## Claims

1. Method of burning organic pollutants in supercritical carbon dioxide, wherein
a) without using a catalyst,
b) a solution of the pollutants is produced in supercritical carbon dioxide,
c) a quantity of oxygen, which is sufficient to oxidise the pollutants fully, is dissolved in the solution which is in the supercritical state, and
d) the solution is brought into contact with a hot body which has such a temperature that the carbon proportion of the pollutants is oxidised by the oxygen to form carbon dioxide.

2. Method according to claim 1, wherein water or hydrogen peroxide is additionally dissolved in the solution which is in the supercritical state.

3. Method according to claim 1, wherein the hot body has a temperature of at least 200° C.

4. Method according to claim 1, 2 or 3, wherein the pressure during the oxidation reaction is kept within the range of between 70 bar and 300 bar.

5. Method according to claim 1, using benzene or benzene derivatives as the pollutant.

6. Method according to claim 1, wherein the solution of the pollutants is produced when a filter, which had been used to clean soil contaminated with the pollutant, is regenerated with supercritical carbon dioxide.

## Revendications

1. Procédé d'incinération de substances organiques nocives dans du dioxyde de carbone supercritique, dans lequel
a) sans utiliser un catalyseur,
b) on prépare une solution des substances nocives dans du dioxyde de carbone supercritique,
c) dans la solution présente à l'état supercritique, on dissout une quantité suffisante d'oxygène pour l'oxydation totale des substances nocives,
d) on met en contact la solution avec un corps chaud qui présente une température telle que la fraction carbonée des substances nocives est oxydée en dioxyde de carbone par l'oxygène.

2. Procédé selon la revendication 1,
dans lequel
on dissout en outre de l'eau ou du peroxyde d'hydrogène dans la solution se trouvant à l'état supercritique.

3. Procédé selon la revendication 1,
dans lequel
le corps chaud présente une température d'au moins 200°C.

4. Procédé selon la revendication 1, 2 ou 3,
dans lequel
la pression pendant la réaction d'oxydation est maintenue dans la plage comprise entre 70 bars et 300 bars.

5. Procédé selon la revendication 1,
avec du benzène ou des dérivés de benzène en tant que substance nocive.

6. Procédé selon la revendication 1,
dans lequel
on prépare la solution des substances nocives en régénérant avec du dioxyde de carbone supercritique un filtre ayant été utilisé pour l'épuration de sol contaminé par la substance nocive.
